# EUROPEAN PATENT APPLICATION

(11) **EP 1 936 475 A1**
(43) Date of publication of application: **25.06.2008**
(21) Application number: 06026687.1
(22) Date of filing: 22.12.2006
(51) Int. Cl.: G06F 3/023

(54) **Method of selecting special characters**

(71) Applicant: Inventec Corporation, Shih-Lin District 111 Taipei (TW)
(72) Inventor: Chiang, Kun-Ta, Shih-Lin District Taipei 111 Taiwan (TW)
(74) Representative: Blasberg, Tilo

(57) **Abstract**

A method of selecting special characters in a mobile communication device includes the following steps. First, a letter input signal is received, and then a special character selection signal is received. The method determines whether the special character selection signal persists over a first predetermined time. Finally, a special character is displayed corresponding to the input letter when the special character selection signal persists over the first predetermined time.

## Description

### BACKGROUND OF THE INVENTION

### Field of Invention

The invention relates to a method of selecting special characters and, in particular, to a method of selecting special characters in a mobile communication device.

### Related Art

The functions of mobile communication devices have been improved tremendously over the past few years. Among these functions, character input is very commonly used. Using this function, the user can enter names and phone numbers into a phone book in a mobile phone or a message in a personal digital assistant (PDA).

However, fully enabling users to enter many characters in a mobile communication device must include enabling the user to enter characters used in different languages. For example, to display letters in European languages, the device must include such special characters as "e", "é", or "è" among its inputs. Since the letters in the European languages may be considered a combination of English letters and some symbols, a common input method is to enter an English letter first, followed by editing the letter to produce the desired character.

Let's take the example of displaying the special character "ë". A conventional method for it includes the following steps. First, the user enters a letter (e.g., by pressing the "e" key). Afterwards, the user presses a function key, followed by pressing a symbol key. In this case, several special characters corresponding to the letter are displayed in order (for example, "e" is turned into "é"). When the displayed special character is not the desired one, the user has to repeatedly press the function key and the symbol key, until the desired special character "ë" is displayed. This procedure is obviously too involved.

Another conventional method of selecting special characters includes the following steps. First, the user enters a letter (e.g., by pressing the "e" key). Afterwards, the user presses a function key twice, followed by pressing a symbol key. Several special characters corresponding to the letter are displayed in order (for example, "e" is turned into "é"). When the displayed special character is not the desired one, the user has to repeatedly press the symbol key, until the desired special character "ë" is displayed. However, before entering other characters (e.g., the number 2), the user has to press the function key once again to cancel the function of entering special characters. Therefore, the user has to mind the mode switching between special character and letter inputs.

In view of the foregoing, it is highly desirable to provide a method of selecting special characters with reduced complexity.

### SUMMARY OF THE INVENTION

In view of the foregoing, the invention is to provide a method of selecting special characters with reduced complexity.

To achieve the above, the invention discloses a method of selecting special characters for a mobile communication device. The method includes the following steps. First, a letter input signal is received. Next, a special character selection signal is received. Then, the method determines whether the special character selection signal persists over a first predetermined time. Finally, when the special character selection signal persists over the first predetermined time, a special character is displayed corresponding to the input letter.

As mentioned above, a method of selecting special characters according to the invention starts by entering a letter. A special character selection signal is entered by pressing and holding a function key for a specific time in order to enter a special character and thereby a special character can be displayed. Moreover, in another embodiment, one of the special characters corresponding to the input letter can be selected and then displayed in order by pressing and continuously holding the function key for a predetermined time. Once the function key is released, the special character selection signal stops. This completes the input of the special character. Implementing the invention in a mobile communication device provides a method of simply and conveniently selecting special characters.

### BRIEF DESCRIPTION OF THE DRAWINGS

The invention will become more fully understood from the detailed description given herein below illustration only, and thus is not limitative of the present invention, and wherein:

FIG. 1 is a flowchart of the method of selecting special characters according to the preferred embodiment of the invention;

FIG. 2 is a flowchart of the method of selecting special characters according to another embodiment of the invention; and

FIGS. 3a to 3e are schematic views showing an explicit example of selecting special characters according to the preferred embodiment.

### DETAILED DESCRIPTION OF THE INVENTION

The present invention will be apparent from the following detailed description, which proceeds with reference to the accompanying drawings, wherein the same references relate to the same elements.

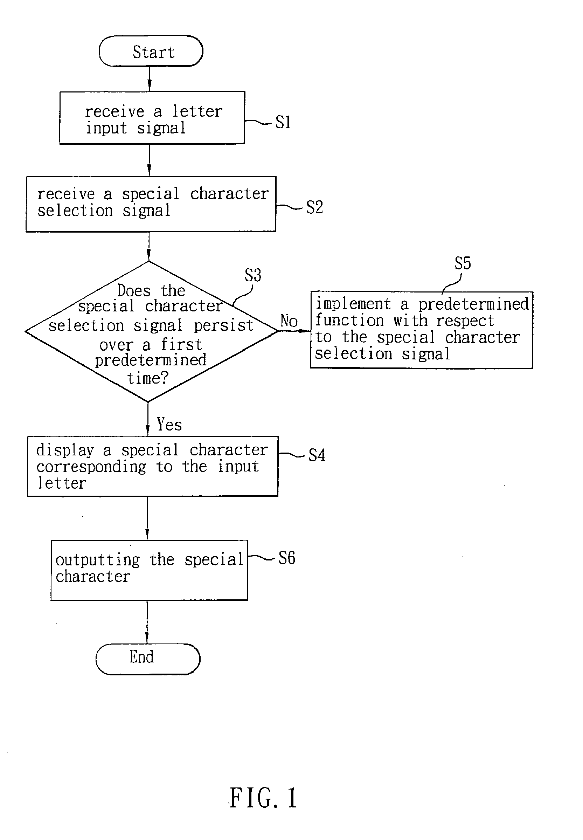

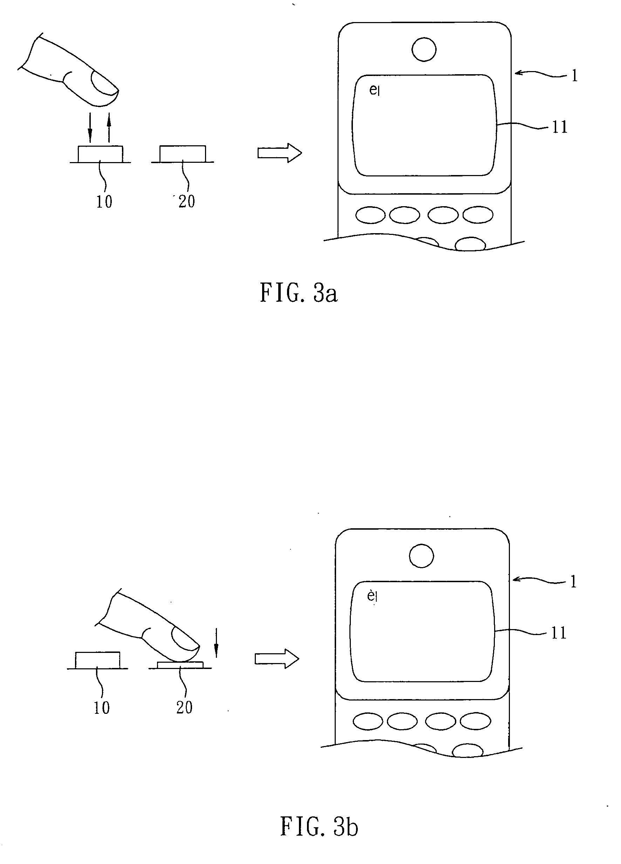

Please refer to FIG. 1 and FIGS. 3a to 3d. A method of selecting special characters according to a preferred embodiment of the invention includes the following steps S1 to S6 and turns a letter into a special character. In particular, the letter corresponds to a specific special character. For example, the letter "e" corresponds to the special character "è". In this embodiment, the method of selecting special characters is implemented in a mobile communication device 1. The mobile communication device 1 can be a mobile phone or a PDA.

In step S1, the mobile communication device 1 receives a letter input signal. When the user presses a letter key 10 once to enter a letter (e.g. the letter e), the letter of "e" can be then displayed in an editing window 11 (FIG. 3a).

In step S2, the mobile communication device 1 receives a special character selection signal. The user presses a function key 20 (FIG. 3b) for outputting a special character selection signal that turns the input letter into a corresponding special character. In this embodiment, the function key 20 may also function as a space key, which means that a space may be displayed after pressing the function key. In other words, the special character selection signal generated by the depression of the function key on a mobile communication device can result in displaying a special character or a space. Please note that the invention is not limited to the above case. The function key 20 can of course be any other keys on the keyboard of the mobile communication device 1.

In step S3, the mobile communication device 1 determines whether the special character selection signal persists over a first predetermined time. The first predetermined time is a predetermined value in the mobile communication device 1. In this embodiment, the mobile communication device 1 determines whether the special character selection signal persists over 0.6 second. Please note that the invention is not limited to the above case. The predetermined time can be set as a different value according to the needs.

In step S4, when the special character selection signal persists over the first predetermined time, the special character corresponding to the input letter is displayed. Following the above example, if the special character selection signal persists over 0.6 seconds, the mobile communication device 1 reads and then turns the letter "e" in the editing window into the corresponding special character "è". As shown in FIG. 3b, the editing window 11 displays the special character "è". In this embodiment, the special character is stored in a storage module of the mobile communication device 1, and the special character is a character used in European languages.

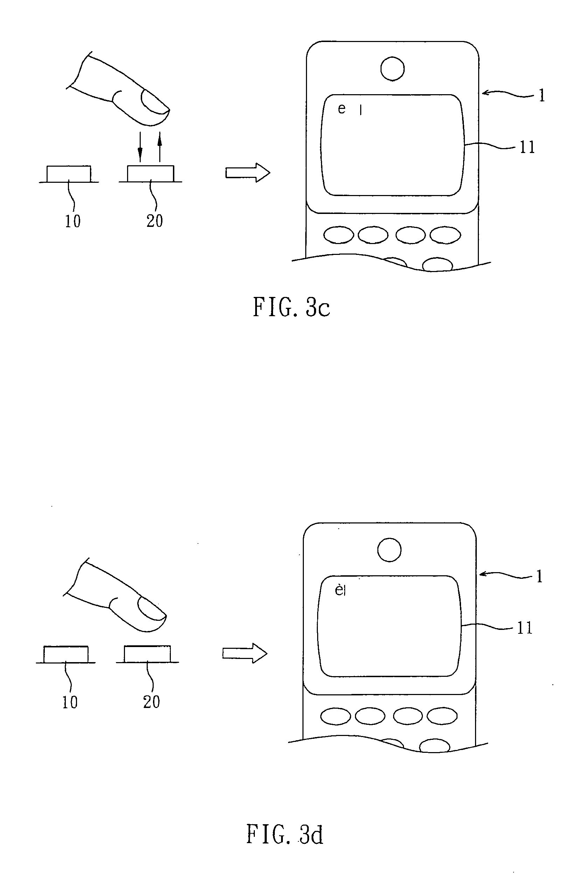

On the other hand, if the special character selection signal is not held over the first predetermined time, the function key 20 is considered as being pressed once. The mobile communication device 1 then implement a predetermined function with respect to the special character selection signal (step S5). As mentioned in step S2, the predetermined function of the function key 20 may also be acting additionally as a space key, which means that the special character selection signal may also be a signal resulting from the depression of the space key (the function key 20). In this case, if the special character selection signal stops within 0.6 seconds after the function key is pressed, the predetermined function of the function key 20 is then executed and thus a space is shown in the editing window (FIG. 3C).

Step S4 is followed by step S6 for outputting the special character. In the current example, the special character "è" is displayed. This completes the input of a special character in the editing window 11, and the device waits for the input of the next letter (FIG. 3d).

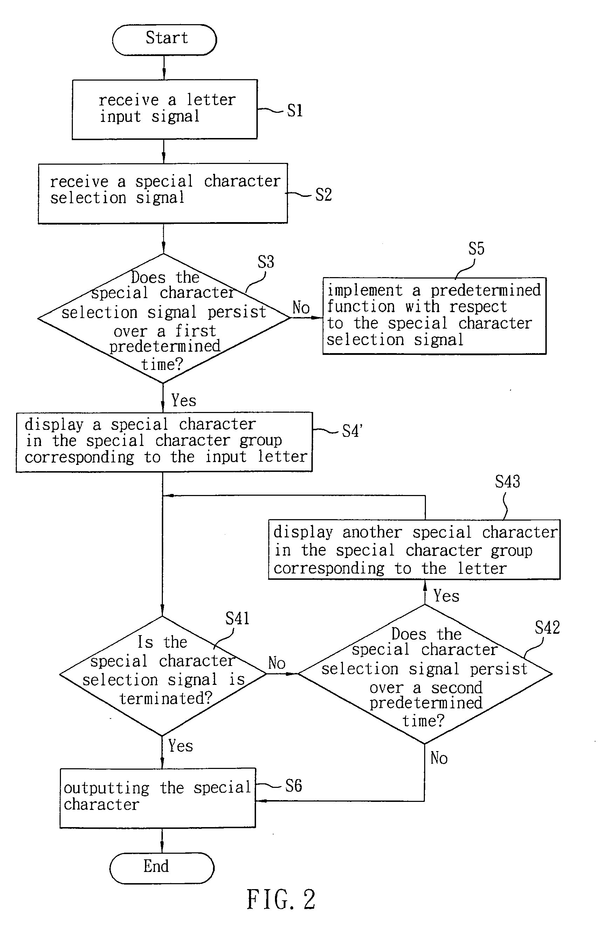

Please refer to FIG. 2 and FIGS. 3a to 3e. The disclosed method of selecting special characters according to another embodiment of the invention includes the following steps S1 to S6 for turning a letter into a special character. The letter corresponds to a special character group comprising several special characters. The special characters can certainly contain the input letter itself. For example, the letter "e" corresponds to the special character group consisting of special characters "è", "é", "ê", ''ë", " 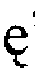 ", and "e". In this embodiment, the method of selecting special characters is implemented in a mobile communication device 1. The mobile communication device 1 can be a mobile phone or a PDA.

In this embodiment, steps S1, S2, S3, and S5 are the same as the previous embodiment and therefore are not further explained herein. In step S4', when the special character selection signal persists over a first predetermined time, a special character in the special character group corresponding to the input letter is displayed. In this case, the special character is the first one in the special character group. For example, after the function key 20 is pressed over the first predetermined time of 0.6 second, the editing window 11 displays the first special character (e.g., "è") in the special character group corresponding to the letter "e" (FIG. 3b).

In this embodiment, step S4' is followed by step S41 to determine whether the special character selection signal is terminated. For example, if the user releases the function key 20, the special character selection signal is determined to be terminated.

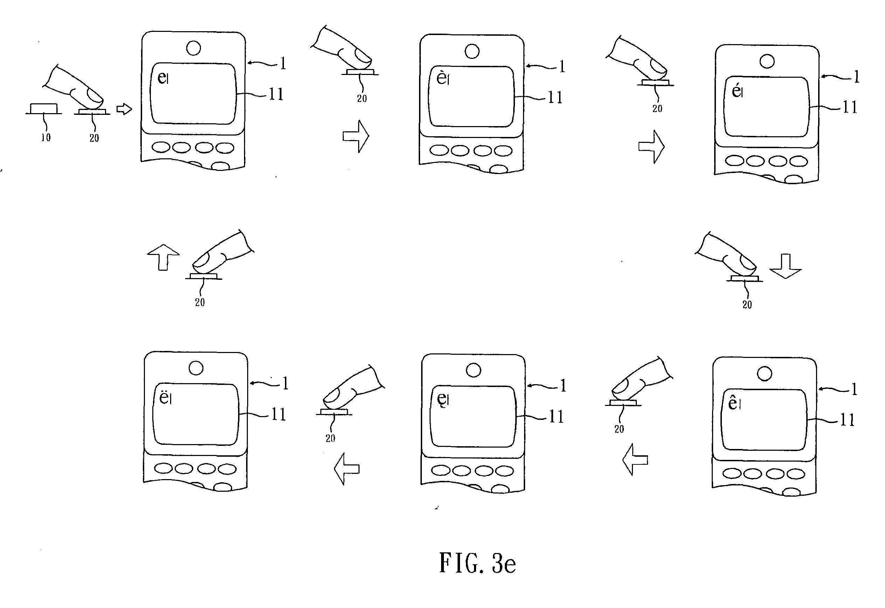

In step S41, as shown in FIG. 3e, the special character selection signal does not terminate. That is, the first displayed special character "è" is not the user's expected one (FIG. 3d). The function key 20 is continuously pressed and held. The mobile communication device 1 then determines whether the special character selection signal persists over a second predetermined time (step S42). For example, the user wants to turn the letter "e" into the special character " 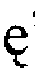 " and the second predetermined time is 0.6 seconds. After determining that the special character selection signal has not been terminated, the depression time of the function key 20 is measured and then compared with the second predetermined time of 0.6 seconds.

After the special character selection signal persists over the second predetermined time (e.g., 0.6 seconds), the mobile communication device 1 displays another special character in the special character group corresponding to the letter (step S43). That is, the editing window 11 displays another special character (e.g., "é", "ê", "ë", " 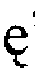 ", or "e") instead of the special character "è". In this embodiment, this other special character is the second special character in the ordered list of the special character group. Step S41 follows to re-determine whether the special character selection signal terminates. Subsequent steps follow until " 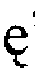 " is displayed. The user then terminates the input of the special character selection signal, achieving the goal of entering the special character " 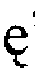 ". More explicitly, as shown in FIG. 3e, the sequence of special characters corresponding to the letter "e" is "e", "é", "ê", "ë", " 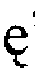 ", and "e". Suppose the user continuously presses the function key 20. After the first predetermined time (e.g., 0.6 seconds), the mobile communication device 1 displays the first special character "è" in the editing window 11. After the second predetermined time passes (e.g., 0.6 seconds), the editing window 11 displays the second special character "é" in the sequence. Afterwards, "ê" and "ë" are respectively displayed after a third predetermined time and a fourth predetermined times are passed. " 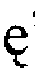 " is finally displayed after a fifth predetermined time has passed. The user terminates the input of the special character selection signal at this moment, and the input of " 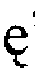 " is over. Alternately, suppose the user accidentally misses the desired special character by depressing and holding the function key 20 over a time period. After passing a sixth predetermined time and displaying the special character "e" in the editing window 11, the whole sequence of the special characters run all over again so that the first special character "è" of the sequence is displayed. In other words, the user thus waits until the desired special character appears again and then stop the input of special character selection signal, so that the desired special character is displayed (step S6).

When the special character selection signal is measured again and is determined to be less than the second predetermined time (e.g., 0.6 seconds), step S6 follows. This completes the input of the special character.

In summary, a method of selecting special characters according to the invention starts by entering a letter. A special character selection signal is entered by pressing a function key for a long time, thereby entering a special character. Moreover, in another embodiment, one of the special characters corresponding to the input letter can be selected and entered by pressing and continuously holding the function key for a predetermined time. Once the function key is released, the special character selection signal stops. This completes the input of the special character. Implementing the invention in a mobile communication device provides a method of simply and conveniently selecting special characters.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A method of selecting special characters in a mobile communication device, comprising steps of:
receiving a letter input signal;
receiving a special character selection signal;
determining whether the special character selection signal persists over a first predetermined time; and
displaying a special character corresponding to the input letter when the special character selection signal persists over the first predetermined time.

2. The method of selecting special characters as in claim 1, wherein the step of determining whether the special character selection signal persists over a first predetermined time is followed by the step of executing a default function corresponding to the special character selection signal when the special character selection signal does not persist over the first predetermined time.

3. The method of selecting special characters as in claim 1, wherein after the step of displaying the special character, the method further comprises a step of:
outputting the special character.

4. The method of selecting special characters as in claim 1, wherein after the step of displaying the special character, the method further comprises a step of:
determining whether the input of the special character selection signal is terminated.

5. The method of selecting special characters as in claim 4, wherein after the step of determining whether the input of the special character selection signal is terminated, the method further comprises a step of:
determining whether the special character selection signal persists over a second predetermined time when the input of the special character selection signal is not terminated.
displaying another special character corresponding to the input letter when the special character selection signal persists over the second predetermined time.

6. The method of selecting special characters as in claim 5, wherein after the step of determining whether the special character selection signal persists over a second predetermined time, the method further comprises a step of:
displaying another special character corresponding to the input letter when the special character selection signal persists over the second predetermined time.

7. The method of selecting special characters as in claim 6, wherein the step of displaying another special character corresponding to the input letter is followed by repeating the step of determining whether the input of the special character selection signal is terminated.

8. The method of selecting special characters as in claim 7, wherein after repeating the step of determining whether the input of the special character selection signal is terminated, the method further comprises a step of:
outputting another special character after the special character selection signal is terminated.

9. The method of selecting special characters as in claim 1, wherein the letter corresponds to a special character group consisting of the special character and the another special character.

10. The method of selecting special characters as in claim 1, wherein the special character or the another special character is a character in European languages.

11. The method of selecting special characters as in claim 6, wherein the letter corresponds to a special character group consisting of the special character and the another special character.

12. The method of selecting special characters as in claim 6, wherein the special character or the another special character is a character in European languages.

13. The method of selecting special characters as in claim 1, wherein the special character selection signal is produced by pressing a space key of the mobile communication device.

14. The method of selecting special characters as in claim 1, wherein the mobile communication device is a mobile phone or a personal digital assistant (PDA).
